# EUROPEAN PATENT APPLICATION

(11) **EP 2 175 352 A2**
(43) Date of publication of application: **14.04.2010**
(21) Application number: 09154060.9
(22) Date of filing: 27.02.2009
(51) Int. Cl.: G06F 3/048, G06F 3/041

(54) **Portable electronic device and method of controlling same**

(30) Priority: 07.10.2008 US 103433 P
(71) Applicant: Research In Motion Limited, Waterloo, Ontario N2L 3W8 (CA)
(72) Inventor: Kwok, Jordanna, Waterloo Ontario N2L 5Z5 (CA); Henhoeffer, Michael, Kitchener Ontario N2L 5Z5 (CA)
(74) Representative: Rickard, David John

(57) **Abstract**

A method of controlling a portable electronic device having a touch screen display moveable with respect to a base thereof. The method includes providing a graphical user interface having user-selectable features on the touch screen display, detecting a touch event at a first location on the touch screen display, rendering a navigation indicator at a first feature of the user-selectable features in the graphical user interface in response to detecting the touch event at the first location, determining if a confirmation of selection is received from release of a switch actuated as a result of movement of the touch screen display with respect to the base, and selecting the first feature in response to determination that the confirmation of selection is received with the touch event at the first location.

## Description

### FIELD OF TECHNOLOGY

The present disclosure relates to portable electronic devices including touch screen display devices and the control of such devices for user interaction.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities. These devices run on a wide variety of networks from data-only networks such as Mobitex® and DataTAC® networks to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display for input and output is particularly useful on such handheld devices, as such handheld devices are small and are therefore limited in space available for user input and output devices. Further, the screen content on the touch screen display devices may be modified depending on the functions and operations being performed. Even still, these devices have a limited area for rendering content on the touch screen display and for rendering features or icons, for example, for user interaction. With continued demand for decreased size of portable electronic devices, touch screen displays continue to decrease in size.

Improvements in touch screen devices are therefore desirable.

### BRIEF DESCRIPTION OF THE DRAWINGS

Embodiments of the present disclosure will now be described, by way of example only, with reference to the attached Figures, wherein:

Figure 1 is a block diagram of a portable electronic device according to one example;

Figure 2 is a front view of an example of a portable electronic shown in a portrait orientation;

Figure 3 is a simplified sectional side view of the portable electronic device of Figure 2 (not to scale), with a switch shown in a rest position;

Figure 4 is a flow chart showing a method for controlling an electronic device according to an embodiment; and

Figures 5 to 7 are front views of the portable electronic device of Figure 2 illustrating an example of a graphical user interface in the method of Figure 4.

### DESCRIPTION OF PREFERRED EMBODIMENTS

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device including a touch screen display and control of the portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to facilitate voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

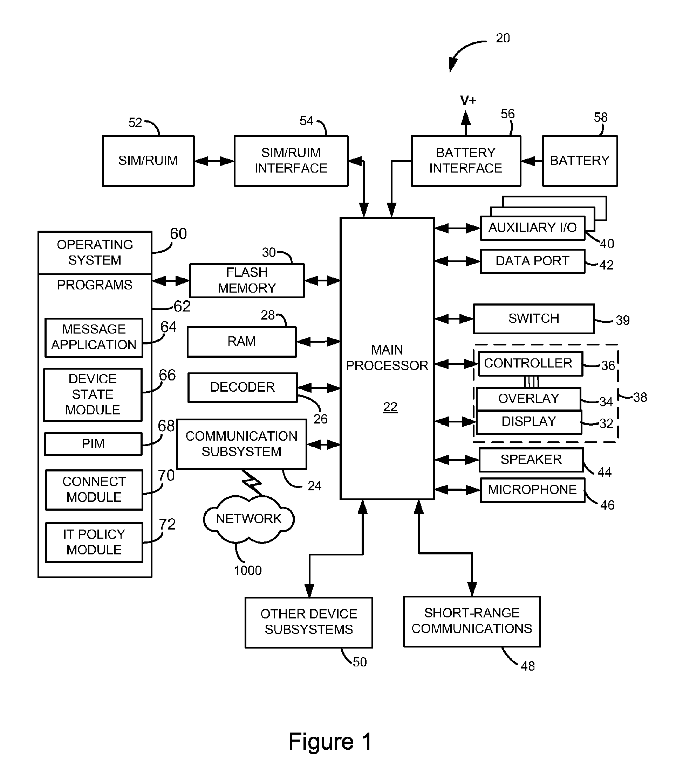

A block diagram of an example of an embodiment of a portable electronic device 20 is shown in Figure 1. The portable electronic device 20 includes a number of components such as the processor 22 that controls the overall operation of the portable electronic device 20. Communication functions, including data and voice communications, are performed through a communication subsystem 24. Data received by the portable electronic device 20 is decompressed and decrypted by a decoder 26, operating according to any suitable decompression techniques, e.g., Yang-Kieffer (YK) decompression, and other known techniques, and encryption techniques, e.g., using an encryption technique such as Data Encryption Standard (DES), Triple DES, or Advanced Encryption Standard (AES). The communication subsystem 24 receives messages from and sends messages to a wireless network 1000. In this example of an embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and persons skilled in the art understand that the embodiments described herein may use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with portable electronic device 20 is a GSM/GPRS wireless network in one example of an implementation, other wireless networks may also be associated with the portable electronic device 20 in various implementations. The different types of wireless networks that may be employed include, for example, data-centric wireless networks, voice-centric wireless networks, and dual-mode networks that support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex and DataTAC network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 connected to an electronic controller 36 that together make up a touch screen display 38, a switch 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 sends and receives communication signals over the wireless network 1000 after network registration or activation procedures have been completed. Network access is associated with a subscriber or user of the portable electronic device 20. To identify a subscriber according to the present embodiment, the portable electronic device 20 uses a Subscriber Identity Module or a Removable User Identity Module (SIM/RUIM) card 52, , inserted into a SIM/RUIM interface 54 for communication with a network such as the network 1000. The SIM/RUIM card 52 is one type of a conventional "smart card" that may be used to identify a subscriber of the portable electronic device 20 and to personalize the portable electronic device 20, among other things. In the present embodiment, the portable electronic device 20 is not fully operational for communication with the wireless network 1000 without the SIM/RUIM card 52. After inserting the SIM/RUIM card 52 into the SIM/RUIM interface 54, a subscriber is able to access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, the SIM/RUIM card is coupled to the processor 22. In order to identify the subscriber, the SIM/RUIM card 52 may include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook or calendar information and recent call information. Alternatively, user identification information may also be programmed into the flash memory 30.

The portable electronic device 20 is a battery-powered device and includes a battery interface 56 for receiving one or more rechargeable batteries 58. In at least some embodiments, the battery 58 may be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 that are described in more detail below. The operating system 60 and the software components 62 that are executed by the processor 22 are typically stored in a persistent store such as the flash memory 30, which may alternatively be a read-only memory (ROM) or similar storage element (not shown). Those skilled in the art appreciate that portions of the operating system 60 and the software components 62, such as specific software applications 64, 66, 68, 70 and 72, or parts thereof, may be temporarily loaded into a volatile store such as the RAM 28. Other software components may also be included, as is well known to those skilled in the art.

The subset of software components 62 that control basic device operations, including data and voice communication applications, are typically installed on the portable electronic device 20 during its manufacture. Other software applications include a message application 64 such as any suitable software program that facilitates a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software components 62 may further include a device state module 66, a PIM 68, and other suitable modules (not shown). The device state module 66 provides persistence, i.e., the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items, which may be particularly advantageous when the host computer system is the portable electronic device subscriber's office computer system.

The software components 62 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that may be integrated with the portable electronic device 20 to facilitate the portable electronic device 20 to use any number of services associated with the enterprise system. The connect module 70 facilitates the establishment, by the portable electronic device 20, of an end-to-end secure, authenticated communication pipe with the host system. A subset of applications for which access is provided by the connect module 70 may be used to pass IT policy commands from the host system to the portable electronic device 20, which may be performed in a wireless or wired manner. These instructions may then be passed to the IT policy module 72 to modify the configuration of the device 20. Alternatively, in some cases, the IT policy update may also be performed over a wired connection.

Other types of software applications may also be installed on the portable electronic device 20. These software applications may be third party applications, which are added after the manufacture of the portable electronic device 20. Examples of third party applications include games, calculators, utilities, and so forth.

The additional applications may be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 may be any suitable port that enables data communication between the portable electronic device 20 and another computing device. The data port 42 may be a serial or a parallel port. In some instances, the data port 42 may be a USB port that includes data lines for data transfer and a supply line that provides a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, may also be implemented on the portable electronic device 20. Although voice or audio signal output is accomplished primarily through the speaker 44, the display 32 may also be used to provide additional information such as the identity of a calling party, duration of a voice call, or other voice call related information.

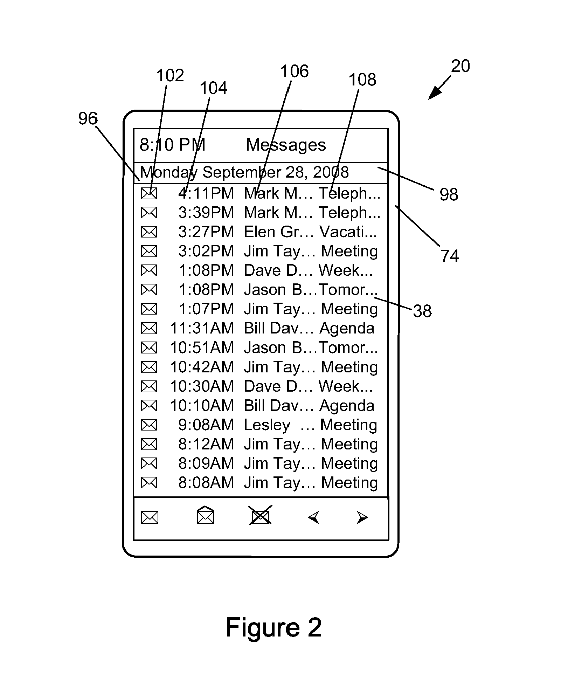

Reference is now made to Figure 2, which shows a front view of an example of a portable electronic device 20 in portrait orientation. The portable electronic device 20 includes a housing 74 that houses the internal components that are shown in Figure 1 and frames the touch screen display 38 such that the touch screen display 38 is exposed for user-interaction therewith when the portable electronic device 20 is in use.

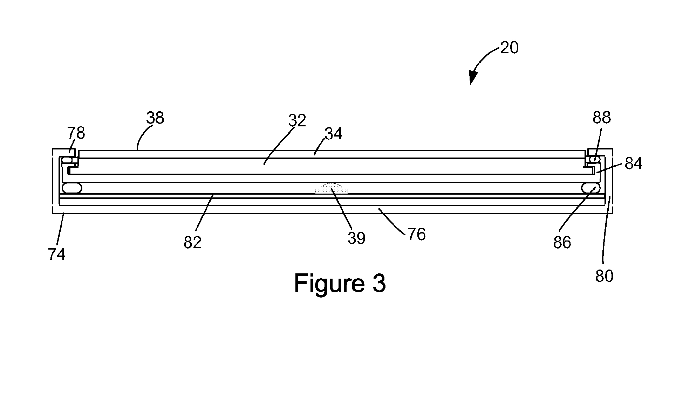

As shown in Figure 3, the housing 74 includes a back 76, a frame 78, which frames the touch-sensitive display 38, sidewalls 80 that extend between and generally perpendicular to the back 76 and the frame 78, and a base 82 that is spaced from and generally parallel to the back 76. The base 82 may be any suitable base and may include, for example, a printed circuit board or flex circuit board. The back 76 includes a plate (not shown) that is releasably attached for insertion and removal of, for example, the battery 58 and the SIM/RUIM card 52 described above. The back 76, the sidewalls 80 and the frame 78 may advantageously be injection molded, for example. In the example of the portable electronic device 20 shown in Figure 2, the frame 78 is generally rectangular with rounded corners although other shapes are possible.

The display 32 and the overlay 34 may be supported on a support tray 84 of suitable material such as magnesium for providing mechanical support to the display 32 and overlay 34. The display 32 and overlay 34 are biased away from the base 82, toward the frame 78 by biasing elements 86 such as gel pads between the support tray 84 and the base 82. Compliant spacers 88, which may also be in the form of gel pads for example, are located between an upper portion of the support tray 84 and the frame 78. The touch screen display 38 is moveable within the housing 74 as the touch screen display 38 is moved toward the base 82, thereby compressing the biasing elements 86. The touch screen display 38 may also be pivoted within the housing 74 with one side of the touch screen display 38 moving toward the base 82, thereby compressing the biasing elements 86 on the same side of the touch screen display 38 that moves toward the base 82.

In the present example, the switch 39 is supported on one side of the base 82, which may be a printed circuit board, while the opposing side provides mechanical support and electrical connection for other components (not shown) of the portable electronic device 20. The switch 39 may be located between the base 82 and the support tray 84. The switch 39, which may be a mechanical dome-type switch, for example, is located in any suitable position such that displacement of the touch screen display 38, resulting from a user pressing the touch screen display 38 with sufficient force to overcome the bias and to overcome the actuation force for the switch 39, depresses and actuates the switch 39. In the present embodiment, the switch 39 is in contact with the support tray 84. Thus, depression of the touch screen display 38 by user application of a force thereto, causes actuation of the switch 39, thereby providing the user with a positive tactile feedback during user interaction with the user interface of the portable electronic device 20. The switch 39 is not actuated in the rest position shown in Figure 3, absent applied force by the user. The switch 39 may advantageously be actuated by pressing anywhere on the touch screen display 38 to cause movement of the touch screen display 38 in the form of movement parallel with the base 82 or pivoting of one side of the touch screen display 38 toward the base 82. The switch 39 is connected to the processor 22 and may be used for further input to the processor when actuated. Although a single switch is shown, any suitable number of switches may be used. Upon release of the switch 39, a signal is sent from the switch 39 to the processor, for example, to confirm a selection.

In the example of the screen shown in Figure 2, the touch screen display 38 includes a list of messages 96 sent from the portable electronic device 20 and received at the portable electronic device 20. The list of messages 96 may include any suitable message types such as email messages, SMS messages, MMS messages, Personal Identification Number (PIN messages), and any other suitable message types as well as any combination of message types. In the present example, the list is in time and date order and includes a date field 98 under which all messages sent and received on the date indicated in the date field 98 are listed. Each message in the list of messages 96 sent and received includes a number of fields for identification. These fields may include, for example, a message type field 102, a time field 104, a correspondent field 106, and a subject field 108. Advantageously, other suitable information fields are possible as further suitable fields may be included in the list of messages or suitable fields may be excluded from the list of messages 96. Regardless of the fields included, the list of messages may be provided in the message application 64, for example, upon execution of the message application 64 resulting from receipt of a user-selection of, for example, the message application 64 from a menu list of selectable applications.

The touch screen display 38 may be any suitable touch screen display such as a capacitive touch screen display, a resistive touch screen display or any other suitable touch screen display. A capacitive touch screen display 38, for example, includes the display 32 and the touch-sensitive overlay 34, in the form of a capacitive touch-sensitive overlay 34. The capacitive touch-sensitive overlay 34 advantageously includes a number of layers in a stack and is fixed to the display 32 via a suitable optically clear adhesive. The layers may include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers may be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user resulting in a change in the electric field of each of the touch sensor layers. The signals represent the respective X and Y touch location values. Other attributes of the user's touch on the touch screen display 38 may advantageously be determined. For example, the size and the shape of the touch on the touch screen display 38 may be determined in addition to the location (X and Y values) based on the signals received at the controller 36 from the touch sensor layers.

Referring still to Figure 2, a user's touch on the touch screen display 38 is advantageously established by determining the X and Y touch location and user-selected input is determined based on the X and Y touch location and the application executed by the processor 22. In the example of the screen shown in the view of Figure 2, the application provides the list of messages 96 and each message is selectable for opening for viewing content, for example, by touching on the touch screen display 38. Thus, the message is selectable by the user based on the X and Y touch location and the application.

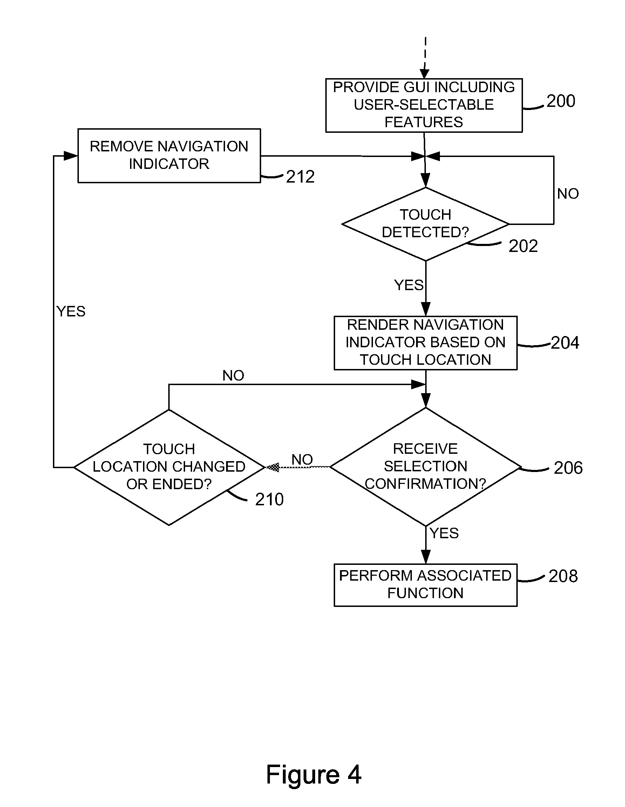

Reference is now made to Figure 4 to describe a method of controlling a portable electronic device in accordance with one embodiment. The steps of Figure 4 may be carried out by routines or subroutines of software executed by the processor 22. Coding of software for carrying out such steps is well within the scope of a person of ordinary skill in the art.

In general, the method of controlling the portable electronic device 20 having the touch screen display 38 includes providing 200 a graphical user interface (GUI) having user-selectable features on the touch screen display 38, detecting 202 a touch event at a first location on the touch screen display 38, rendering 204 a navigation indicator at a first feature of the user-selectable features in the GUI in response to detecting the touch event at the first location, determining 206 if a confirmation of selection is received from release of the switch 39 actuated as a result of movement of the touch screen display 38 with respect to the base 82, and selecting 208 the first feature in response to determination that the confirmation of selection is received.

The GUI is displayed on the display 32 and includes user-selectable features such as a list of messages, a list of contacts, a list of calendar events, thumbnail images, virtual keys, buttons, and/or any other suitable selectable features. The GUI may be provided in any suitable application, such as the message application 64, or any other suitable application.

A touch event is detected 202 upon user touching of the touch screen display 38. Such a touch event may be determined upon a user touch at the touch screen display 38 for selection of, for example, a feature or features, such as a message, (e.g., email message, SMS, MMS), file or document, command, hyperlink, virtual key or button, icon, or other user-selectable feature. If no touch event is detected, the processor continues to determine if a touch event has occurred. Signals are sent from the touch-sensitive overlay 34 to the controller 36 when a suitable object such as a finger or other conductive object held in the bare hand of a user is detected. Thus, the touch event is detected and the X and Y location of the touch are determined at step 202. A navigation indicator such as highlighting or a pop-up box or other indicator for a feature at or proximal the touch location is rendered at step 204. The X and Y location of touch is advantageously used to determine the feature for those coordinates. The feature is dependent on the application and the GUI at the time of the touch event. The navigation indicator may be rendered at a feature at the point of contact of the user's finger with the touch-sensitive overlay 34 or may be rendered at a feature near the point of contact based on a predetermined offset, for example, to compensate for a difference between an actual location of touch and a target touch location. A predetermined offset, for example, may be determined based on prior calibration of the actual touch location and a target touch location on the touch screen display 38. Thus, the navigation indicator is rendered at a location based on the touch location.

At step 206, it is determined if confirmation of selection is received. The confirmation of selection is a signal received as a result of release of the switch 39 upon removal of a force applied to the touch screen display 38, thereby permitting the touch screen display 38 to return to the rest position shown in Figure 3. Movement of the touch screen display 38 in the form of pivoting, against the bias of the touch screen display and against the actuation force of the switch 39 during the touch event causes depression of the switch 39 and, when released, confirms selection of the feature at which the navigation indicator is located at the time of release. The release of the switch 39 from a depressed position to the rest position shown in Figure 3 results in confirmation of selection. The feature indicated by the navigation indicator, for example, highlighted at the time of release, is thereby selected. As indicated above, the navigation indicator is rendered based on the touch location. The navigation indicator is therefore movable from feature to feature based on the touch location until confirmation of selection in the form of a signal from release of the switch 39 is received.

If the confirmation is received, the process continues with step 208, where the feature indicated by the navigation indicator, for example, highlighted at the time of release, is thereby selected, and a function associated with the selected feature is performed. The function performed is therefore dependent on the touch location at the time the switch is released and on the application and GUI in which the navigation indicator is provided. The associated function may be, for example, selection of a feature from a list to display further details, selection of a thumbnail image for display, selection of an alphanumeric character from a virtual keyboard, or any other suitable function.

Absent actuation of the switch 39 caused by depression of the touch screen display 38 and therefore absent selection confirmation at step 206, the process continues with step 210, where a determination is made as to whether the touch location has changed or a touch has ended based on signals received at the controller 36 from the touch sensor layers. If the touch location has not changed, the process returns to step 206. Alternatively, if the touch location has changed, either by sliding to a new location on the touch screen display 38 or by removal of the finger, thereby ending the touch event, the change is detected at step 210, and the process continues with step 212, where the previously rendered navigation indicator is removed (unrendered). If the touch location has changed, the X and Y location of the touch is again determined at step 202. If the touch has ended, the processor 22 awaits detection of a new touch event as described above.

The process shown and described with reference to Figure 4 is simplified for the purpose of the present explanation and other steps and substeps may be included. Alternatively, some of the steps and substeps may be excluded.

Further reference is made to Figure 4 to describe an example of the method of controlling the portable electronic device 20, with reference also to Figure 2, and Figures 5 through 7, which show front views of the portable electronic device 20 illustrating examples of GUIs.

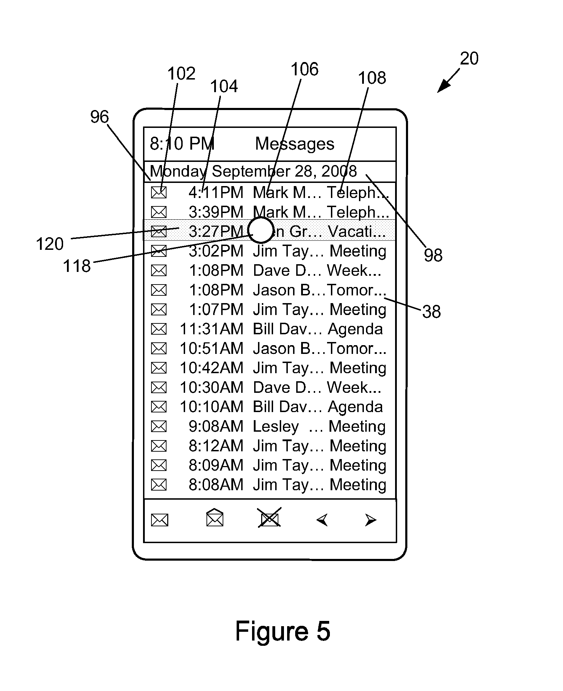

As shown, the GUI in the example of Figure 5 provides 200 the list of user-selectable features in the form of messages and each message in the list of messages 96 may be selected for opening for viewing content, for example.

A touch event is detected 202 upon user touching of the touch screen display 38. Thus, signals are sent from the touch-sensitive overlay 34 to the controller 36 and the X and Y location of the touch are determined 202. For the purpose of the present example, the location of touch is determined to be at one of the messages in the list of messages 96. In the present example, the location of touch is determined to be at the location indicated by the numeral 118 in Figure 5. In response to detecting the touch event and determination of the X and Y location of the touch, the navigation indicator, in the form of highlighting, is rendered at the message 120 in the list of messages 96 at which the touch 118 is determined on the touch screen display 38.

At step 206, it is determined if confirmation of selection is received. The confirmation of selection is a signal received as a result of release of the switch 39 as described above. Thus, during the touch event at the location of the touch 118 on the touch screen display 38, the touch screen display 38 is pressed with sufficient force to cause actuation of the switch 39 and, upon release, a signal is sent to the processor confirming selection. If a user mistakenly touches the touch screen display 38 and depresses the touch screen display 38 with sufficient force to depress the switch 39 at a location of touch, for example, at an adjacent message in the list of messages 96, the user may slide his or her finger while maintaining the applied force, and thus depression of the switch 39, until the intended message is highlighted.

With receipt of confirmation, the message 120, highlighted at the time of release, is selected and a function associated with the selected feature is performed 208. For example, the function performed may be the opening of the message to display message details.

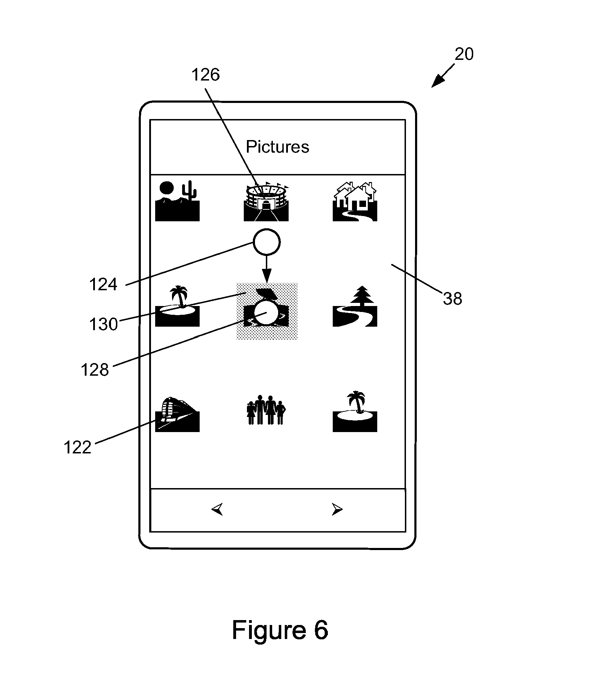

Referring now to the example GUI of Figure 6, a GUI is provided 200 in a picture viewing application and provides a plurality of selectable thumbnail images 122 for viewing selection. A touch event on the touch screen display 38 is detected 202 upon user touching of the touch screen display 38. Again, signals are sent from the touch-sensitive overlay 34 to the controller 36 and the X and Y location of the touch are determined. In the present example, the location of the touch 124 is determined to be at one of the thumbnail images 122. In response to detecting 202 the touch event and determination of the X and Y location of the touch, the navigation indicator, in the form of highlighting, is rendered 204 at the thumbnail image 126 above the touch 124, for example. The user may slide his or her finger to a desired one of the thumbnail images 122 while maintaining sufficient force on the touch screen display 38 to maintain depression of the switch 39. In the present example, the user slides the finger to a secondary touch location 128, and therefore no selection confirmation is received 206and the change in touch location is determined 210. The navigation indicator previously rendered at the thumbnail image indicated by the numeral 126 is therefore removed 212, and the X and Y location of the new touch is determined 202. The new navigation indicator is then rendered 204 as the thumbnail image 130 is highlighted in response to determination of the X and Y touch location. Confirmation of selection is received 206 as a result of release of the switch 39 as described above.

With receipt of confirmation, the thumbnail image 130, highlighted at the time of release, is selected and a function associated with the selected feature is performed 208. For example, the function performed may be the opening of the image for display on the touch screen display 38.

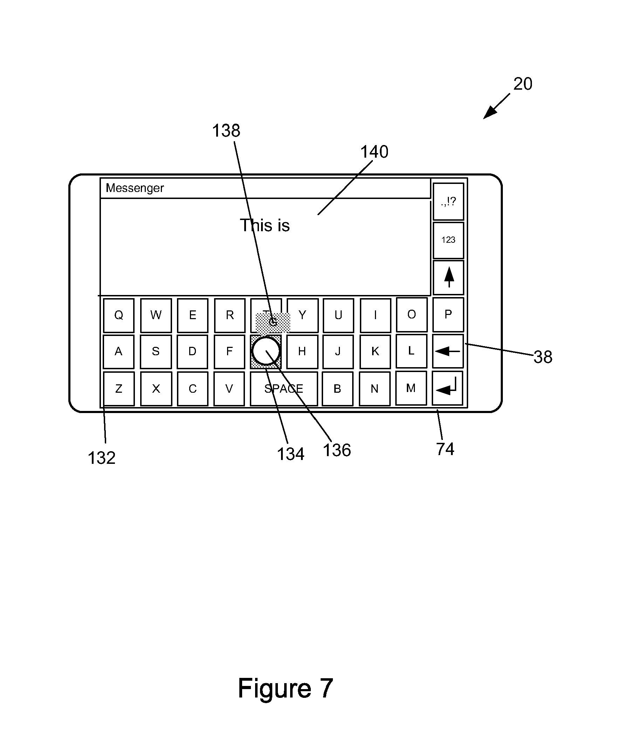

Referring now to the example GUI of Figure 7, a virtual keyboard is provided, 200 including a plurality of user-selectable features in the form of virtual keys 132. In the present example, the GUI is provided in a Messenger application for the composition of a message. A touch event on the touch screen display 38 is detected upon user touching of the touch screen display 38. Again, signals are sent from the touch-sensitive overlay 34 to the controller 36 and the X and Y location of the touch are determined 202. For the purpose of the present example, the touch location 136 is determined to be at one of the keys "G" 134. In response to detecting the touch event and determination of the X and Y location of the touch, the navigation indicator, in the form of highlighting along with a pop-up indicator 138, is rendered 204. The highlighting and pop-up indicator rendered for the key "G" 134 are associated with the X and Y location of touch. The pop-up window aids the user in determining the touched key prior to selection as the user's finger may cover, at least partially, the key touched.

As previously described, upon rendering the highlighting and the pop-up window, the user may slide his or her finger to any other desired key while maintaining sufficient force on the touch screen display 38 to maintain depression of the switch 39.

Confirmation of selection may also be received 206 as a result of release of the switch 39 as described above. With receipt of confirmation, the letter "G" is selected and entered into a text entry field 140. Thus, the function performed 208 is the entry of the letter "G" into the text entry field 140.

A method of controlling a portable electronic device having a touch screen display moveable with respect to a base thereof is provided. The method includes rendering a graphical user interface having user-selectable features on the touch screen display, detecting a touch event at a first location on the touch screen display, providing a navigation indicator at one of the user-selectable features in the graphical user interface in response to detecting the touch event at the first location, determining if a confirmation of selection is received from release of a switch actuated as a result of movement of the touch screen display with respect to the base, and selecting the one of the user-selectable features in response to determination that the confirmation of selection is received with the touch event at the first location.

A portable electronic device is provided, including a base, a touch screen display moveable relative to the base, a switch disposed between the touch screen display and the base and actuatable as a result of movement of the touch screen display relative to the base, and functional components including a processor connected to the touch screen display and the switch, and a memory device for storage of computer-readable program code. The computer-readable program code is executable by the processor for providing a graphical user interface having user-selectable features on the touch screen display, detecting a touch event at a first location on the touch screen display, rendering a navigation indicator at one of the user-selectable features in the graphical user interface in response to detecting the touch event at the first location, determining if a confirmation of selection is received from release of the switch actuated as a result of movement of the touch screen display with respect to the base, and selecting the one of the user-selectable features in response to determination that the confirmation of selection is received with the touch event at the first location.

A computer-readable medium having computer-readable code embodied therein for execution by a processor of a portable electronic device provides a graphical user interface having user-selectable features on a touch screen display of the portable electronic device, detecting a touch event at a first location on the touch screen display, rendering a navigation indicator at one of the user-selectable features in the graphical user interface in response to detecting the touch event at the first location, determining if a confirmation of selection is received from release of a switch actuated as a result of movement of the touch screen display with respect to a base of the portable electronic device, and selecting the one of the user-selectable features in response to determination that the confirmation of selection is received with the touch event at the first location.

A feature is therefore not selected and the associated function is not performed until the switch underlying the touch screen display is released. A navigation indicator, such as highlighting, is rendered at the user-selectable feature when the user touches the touch screen display. If the user determines that a highlighted feature is not the intended target, the user may reposition his or her finger by sliding the finger along the touch screen display while maintaining sufficient force to maintain the touch screen, and thus the switch, in the depressed position. This permits correction prior to selection of a feature. Further, the user may attend to the correction in a single touch event, reducing time to lift a finger and touch the screen in other locations to confirm selection or to correct an error. Thus, a user may reposition the finger before an erroneous selection is made that results in decreased user satisfaction, increased use time and therefore increased power requirements and decreased battery life.

While the embodiments described herein are directed to particular implementations of the portable electronic device and the method of controlling the portable electronic device, modifications and variations may occur to those skilled in the art. All such modifications and variations are believed to be within the sphere and scope of the present disclosure. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

**1.** A method of controlling a portable electronic device having a touch screen display, the method comprising:
providing a graphical user interface having user-selectable features on the touch screen display;
detecting a touch event at a first location on the touch screen display;
rendering a navigation indicator at a first feature of the user-selectable features in the graphical user interface in response to detecting the touch event at the first location;
determining if a confirmation of selection is received from release of a switch actuated by the touch screen display; and
if a confirmation of selection is determined as being received, selecting the first feature in response to determination that the confirmation of selection is received with the touch event at the first location on the touch screen display.

**2.** The method according to claim 1, further comprising performing an associated function upon selection of the first feature.

**3.** The method according to claim 1, further comprising unrendering the navigation indicator absent receipt of the confirmation of selection with the touch event at the first location on the touch screen display, and avoiding performing the associated function.

**4.** The method according to claim 1 or claim 2, further comprising rendering the navigation indicator at a second feature of the user-selectable features in response to detecting movement of the touch event to a second location on the touch screen display.

**5.** The method according to claim 4, further comprising determining if the confirmation of selection is received from release of the switch and selecting the second feature in response to determination that the confirmation of selection is received with the touch event at the second location on the touch screen display.

**6.** A portable electronic device comprising:
a base;
a touch screen display moveable relative to the base;
a switch disposed between the touch screen display and the base and actuatable as a result of movement of the touch screen display relative to the base; and
functional components comprising a processor connected to the touch screen display and the switch, and a memory device for storage of computer-readable program code executable by the processor for causing the portable electronic device to implement the steps of the method of any one of claims 1 to 5.

**7.** The portable electronic device according to claim 6, wherein the switch comprises a dome-type mechanical switch.

**8.** The portable electronic device according to claim 6 or claim 7, further comprising a housing in which the base, the touch screen display, the switch and the functional components are housed, the housing having a frame around a periphery of the touch screen display and exposing the touch screen display for user interaction therewith.

**9.** The portable electronic device according to claim 8, further comprising compliant pads disposed between the touch screen display and the frame of the housing.

**10.** The portable electronic device according to claim 9, further comprising compliant members between the touch screen display and the base for biasing the touch screen display away from the base.

**11.** The portable electronic device according to claim 10, wherein the compliant members and the compliant pads comprise gel pads.

**12.** The portable electronic device according to claim 10 or claim 11, wherein the touch screen display is moved toward the base to actuate the switch when a threshold force is exceeded for compressing the compliant members and depressing the switch.

**13.** A computer-readable medium having computer-readable code embodied therein for execution by a processor of a portable electronic device for causing the portable electronic device to implement the steps of the method of any one of claims 1 to 5.

**14.** A method comprising:
providing a graphical user interface having a plurality of user-selectable features on a touch screen display of a portable electronic device;
detecting a touch event at a first location associated with a first user-selectable feature on the touch screen display;
rendering a first navigation indicator at the first user-selectable feature in the graphical user interface in response to detecting the touch event at the first location;
prior to detecting confirmation of selection of the first user-selectable feature, detecting a touch event at a second location associated with a second user-selectable feature on the touch screen display;
rendering a second navigation indicator at the second user-selectable feature in response to detecting movement of the touch event to a second location on the touch screen display;
determining if a confirmation of selection is received from release of a switch actuated by the touch screen display with the touch event at the second location; and
if a confirmation of selection is determined as being received, selecting the second feature in response to determination of confirmation of selection.

**14.** A portable electronic device comprising:
a base;
a touch screen display moveable relative to the base;
a switch disposed between the touch screen display and the base and actuatable as a result of movement of the touch screen display relative to the base; and
functional components comprising a processor connected to the touch screen display and the switch, and a memory device for storage of computer-readable program code executable by the processor for causing the portable electronic device to implement the steps of the method of claim 14.
